# EUROPEAN PATENT APPLICATION

(11) **EP 2 606 950 A1**
(43) Date of publication of application: **26.06.2013**
(21) Application number: 12198177.3
(22) Date of filing: 19.12.2012
(51) Int. Cl.: B01D 46/10, B01D 46/48, B01D 46/52, B01D 46/00

(54) **Filter assembly**

(30) Priority: 20.12.2011 GB 201121927
(71) Applicant: BOFA International Limited, Poole, Dorset BH17 7DX (GB)
(72) Inventor: Cornell, David Lawrence, Creekmoor Industrial Estate Poole BH17 7DX (GB)
(74) Representative: Robinson, Simon John

(57) **Abstract**

A fume filter assembly (1) comprising an enclosure which comprises a drop-out contaminant collection chamber(2), a fume inlet into said chamber, and a filter medium (3) located in said enclosure located above the drop-out contaminant collection chamber, wherein the chamber is such that contaminants carried within an air flow into said chamber experience a sudden decrease in velocity such that larger/heavier particles tend to fall to the floor of the chamber, whereas smaller/lighter particles tend to draw upwardly towards the filter.

## Description

### Technical Field

The present invention relates generally to filter assemblies.

### Background

In many industries such as electronics fabrication, laser marking/cutting/engraving and pharmaceuticals, extraction systems are used to capture hazardous particulate and gaseous/vaporised matter generated by industrial processes.

Known fume extraction systems comprise multiple graded particulate filters and a gas filter (typically activated carbon based) which are housed in a single unit, together with an extraction pump. The extraction pump draws contaminated air into the unit, through the filters to remove the contaminants and outputs filtered air to the working area.

When saturated, the filters, and in particular the gas filter, must be replaced. In environments where high rates of gas/vapours are generated, the filters will need to be replaced more often.

Known filter assemblies include bag filters in which a standpipe (which carries fumes towards and into the filter assembly) seal is sewn into the fabric of the bag filter. Because the bag filter is made of flexible material, the standpipe end (which is received by the seal) can have a tendency to become detached, and so allowing particles in the fumes to bypass the bag filter and directly reach a subsequent downstream filter (such as a HEPA filter) and so prematurely block that filter.

Bag filters also suffer from the drawback that when an operator needs to replace the filter bag filters have a tendency to contract and puff, potentially exposing the operator to harmful contaminants.

Also, with known filters, so-called skinning of filter media can occur in which (sticky) contaminate tends to form a skin over the filter surface and so reduces the life of the filter.

Known filter assemblies can relatively quickly become blocked by virtue of large particulate being retained in the filter and so significantly reducing the overall effective surface area.

We have realised that it would be desirable for there to be an improved filter assembly.

### Summary

According to the invention there is provided a fume filter assembly comprising an enclosure which comprises a drop-out contaminant collection chamber, a fume inlet into said chamber, and a filter medium located in said enclosure located above the drop-out contaminant collection chamber, wherein the chamber is such that contaminants carried within an air flow into said chamber experience a sudden decrease in velocity such that larger/heavier particles tend to fall to the floor of the chamber, whereas smaller/lighter particles tend to be drawn upwardly toward the filter.

Preferably the filter medium comprises a pleated filter medium. Preferably the filter medium comprises a gas porous fabric or sheet material.

Preferably, the chamber presents a larger surface area to the contaminants carried in the fumes as compared to the surface area of a conduit which carries the fumes into the chamber.

Preferably the inlet arranged to cause the fumes to enter directly into the collection chamber. The inlet is preferably provided in a wall of the enclosure located adjacent to, and at least in part defining, the chamber.

Preferably the fume inlet is below the filter medium.

The drop-out collection chamber is preferably a void.

The filter medium is preferably in communication with the drop-out chamber.

The drop-out chamber is preferably situated in a lower part of the enclosure and the filter medium located in an upper part of the enclosure.

The inlet is preferably arranged to be detachably connectable to a fume conduit.

The inlet preferably directs fumes directly into the drop-out contaminant collection chamber.

The inlet preferably comprises a seal arranged to engage with an end portion of the fume conduit.

The filter assembly is preferably a unit which is removably insertable into a fume extraction housing. The assembly is preferably manually removably insertable into the fume extraction housing.

The fume extraction housing preferably completely accommodates the filter assembly.

The filter assembly is preferably slidable into and out of the fume extraction housing.

The filter assembly preferably comprises a fume outlet located above the filter medium. The fume outlet is preferably provided at an upper distal end of the enclosure.

The filter assembly is preferably of substantially parallelepiped form.

### Brief description of the drawings

One embodiment of the invention will now be described, by way of example only, with reference to the following drawings in which:
**Figure 1** is a perspective view of a filter assembly,
**Figure 2a** is a plan view of a seal, and
**Figure 2b** is section of the seal of Figure 2a on A-A.

### Detailed description

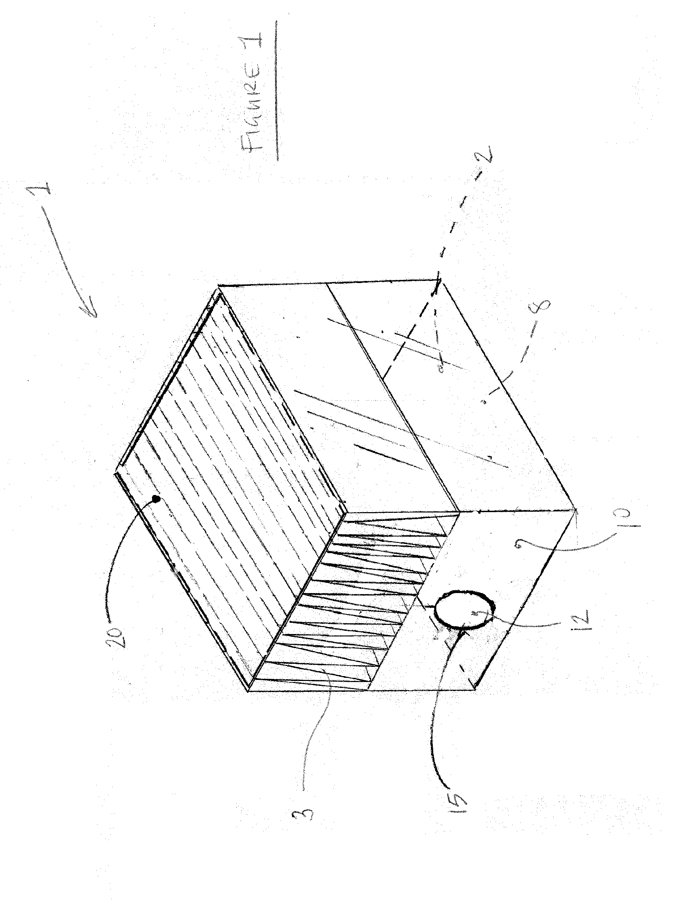

Figure 1 shows a fume filter assembly 1 with a rigid enclosure which comprises a drop-out contaminant collection chamber 2 and a filter medium 3.

The filter medium 3 comprises a pleated filter which comprises a gas porous material which is formed into a pleated configuration. As seen end-on, the filter forms a substantially zigzag profile, comprising inclined flat portions connected at alternating upper and lower apexes. The filter being of pleated construction provides a substantial filtration surface area, and in particular in view of the volume which is the filter occupies.

The filter medium 3 is located above the drop-out collection chamber 2. The filter medium is held in place above the chamber 2.

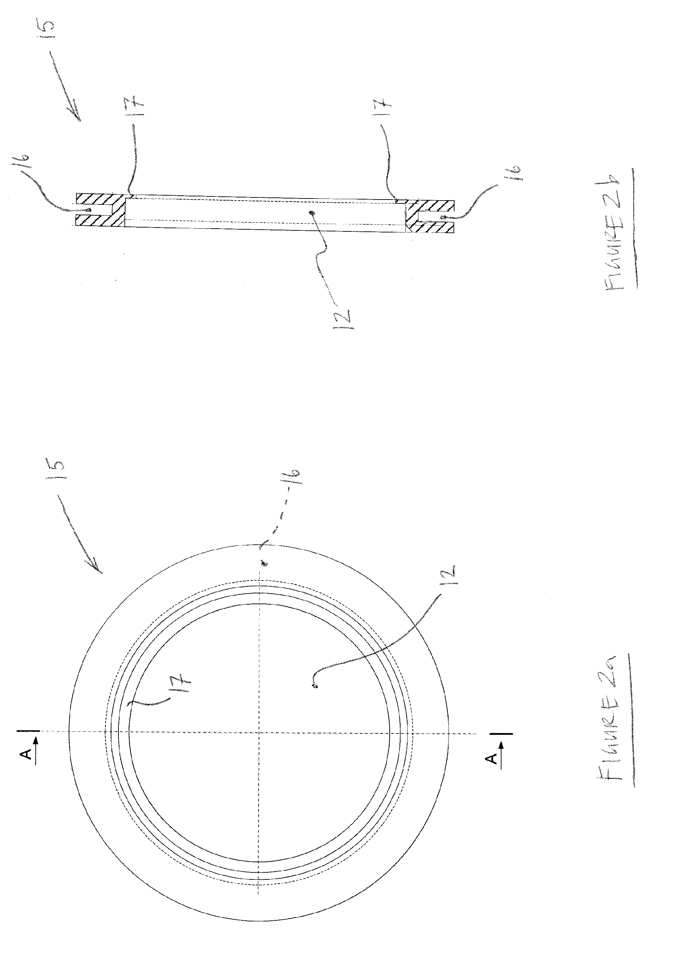

The drop-out contaminant collection chamber 2 is a void located in the lowermost region of the enclosure. In a wall portion 10 of the enclosure, which wall portion at least in part defines the chamber, there is provided an aperture 12. The aperture 12 is bounded by a seal 15, which is shown in Figures 2a and 2b. The seal 15 comprises a circumferential slot 16 which receives the wall portion 10. A radially innermost part of the seal comprises a flange 17. As will be described below, the flange 17 is arranged to engage with a fume conduit (such as a standpipe). The aperture 12 is positioned immediately adjacent of the chamber 2 so that fumes are directed directly into the chamber. The seal 15 may be viewed as a grommet-style gasket.

An outlet 20 is provided at an upper end of the filter assembly and is directly above the filter 3. The outlet may comprise a mesh material.

The filter assembly 1 is arranged to be removably insertable into a fume extraction housing (not illustrated). The housing may comprise a cabinet in which is provided a space to removably receive and accommodate the filter assembly 1. The housing comprises support components, arranged to support the filter assembly, and the supports preferably comprise rails (for example provided on opposing sidewalls of the housing). The supports are arranged to automatically guide the inlet into connection with a standpipe which is mounted in (the rear of) the housing. The housing is also arranged to receive at least a further filter assembly, such as a High-Efficiency Particulate Air (HEPA) filter unit 4, located downstream of the filter assembly 1. The housing comprises or is connectable to a suction pump which is operative to draw fumes through the housing and therefore through the filter assemblies.

In use, the filter assembly 1 is loaded into the fume extraction housing. In so doing an end portion of a fume standpipe is received in the aperture 12, with the flange 17 engaging with and being deflected by the outermost surface of the pipe. When the suction pump is activated, contaminated air is drawn through the fume conduit and directly into the chamber 2. The contaminants carried within the air experience a sudden decrease in velocity as they enter the chamber. The larger/heavier particles tend to fall to the floor 8 of the chamber 2, whereas the smaller/lighter particles tend to be drawn upwardly towards the filter 3. The smaller/lighter particulates are prevented from passing through the filter 3, thus protecting the downstream HEPA filter.

Advantageously, the larger/heavier particulates are prevented from reaching the filter 3. This means that a larger proportion of the larger/heavier particulates do not prematurely block the filter. Moreover, when the suction pump is deactivated, the smaller/lighter particles tend to fall from filter 3 (under gravity) towards and into the chamber 2. This further increases the life of the filter.

Because the fume conduit is not attached to the fabric of the filter 3 there is significantly reduced risk of particulates bypassing the filter 3 and reaching the HEPA filter. Furthermore, during filter replacement, because the filter is provided within the rigid enclosure this significantly reduces the risk of the filter being caused to contract and puff and so prevents contaminant exposure to the operator.

The filter assembly 1 may be considered as a prefilter which protects the HEPA filter from larger particulates.

## Claims

1. A fume filter assembly comprising an enclosure which comprises a drop-out contaminant collection chamber, a fume inlet into said chamber, and a filter medium located in said enclosure located above the drop-out contaminant collection chamber, wherein the chamber is such that contaminants carried within an air flow into said chamber experience a sudden decrease in velocity such that larger/heavier particles tend to fall to the floor of the chamber, whereas smaller/lighter particles tend to be drawn upwardly toward the filter.

2. An assembly as claimed in claim 1 in which the filter medium comprises a pleated filter medium.

3. An assembly as claimed in claim 1 or claim 2 in which the filter medium comprises a gas porous fabric or sheet material.

4. An assembly as claimed in any preceding claim in which, the chamber presents a larger surface area to the contaminants carried in the fumes as compared to the surface area of a conduit which carries the fumes into the chamber.

5. An assembly as claimed in any preceding claim in which the fume inlet is arranged to cause the fumes to enter directly into the collection chamber.

6. An assembly as claimed in any preceding claim in which the fume inlet is provided in a wall of the enclosure located adjacent to, and at least in part defining, the chamber.

7. An assembly as claimed in any preceding claim in which the fume inlet is below the filter medium.

8. An assembly as claimed in any preceding claim in which the drop-out collection chamber is a void.

9. An assembly as claimed in any preceding claim in which the filter medium is in communication with the drop-out chamber.

10. An assembly as claimed in any preceding claim in which the drop-out chamber is situated in a lower part of the enclosure and the filter medium located in an upper part of the enclosure.

11. An assembly as claimed in any preceding claim in which the fume inlet is arranged to be detachably connectable to a fume conduit.

12. An assembly as claimed in any preceding claim in which the inlet directs fumes directly into the drop-out contaminant collection chamber.

13. An assembly as claimed in any preceding claim in which the inlet comprises a seal arranged to engage with an end portion of the fume conduit.

14. An assembly as claimed in any preceding claim in which the filter assembly is a unit which is removably insertable into a fume extraction housing.

15. An assembly as claimed in any preceding claim which is manually removably insertable into the fume extraction housing.

16. An assembly as claimed in any preceding claim in which the fume extraction housing completely accommodates the filter assembly.

17. An assembly as claimed in any preceding claim in which the filter assembly is slidable into and out of the fume extraction housing.

18. An assembly as claimed in any preceding claim which comprises a fume outlet located above the filter medium.

19. An assembly as claimed in claim 18 in which the fume outlet is provided at an upper distal end of the enclosure.

20. An assembly as claimed in any preceding claim which is of substantially parallelepiped form.
